# EUROPEAN PATENT APPLICATION

(11) **EP 1 521 435 A2**
(43) Date of publication of application: **06.04.2005**
(21) Application number: 04006086.5
(22) Date of filing: 15.03.2004
(51) Int. Cl.: H04M 1/725

(54) **Method for communication control and wireless communication system**

(30) Priority: 30.09.2003 JP 2003342562
(71) Applicant: Kabushiki Kaisha Toshiba, Tokyo (JP)
(72) Inventor: Tamura, Toshiya, Tokyo 105-8001 (JP)
(74) Representative: HOFFMANN - EITLE

(57) **Abstract**

There is disclosed a communication control method in a wireless communication system having a base station (1) of a mobile communication system, a mobile station (2) and a terminal device (3) connectable to the mobile terminal (2) through short-distance wireless communication. In this wireless communication system, when an audio incoming call (S11) is generated during data communication (S10), the mobile station (2) notifies the terminal device (3) of temporal interruption of the data communication with the terminal device (3, S12). Upon receiving the temporal interruption of the data communication, the terminal device (3) judges that there is an audio incoming interruption instead of a standard procedure in the regular short-distance wireless communication (S14).

## Description

The present invention generally relates to a wireless communication system, and more particularly to a communication control method between a mobile station and a terminal device connected through short-distance wireless communication.

In recent years, a development of a mobile communication system as typified by a mobile phone has been advanced in a wireless communication system.

In a mobile communication system, there has been developed a system in which a mobile phone connectable to a base station by wireless is used as a mobile station and a terminal device can perform data communication through the mobile station.

As the terminal device, there are, e.g., car navigation systems set in vehicles or various kinds of portable digital devices. In the terminal device is incorporated a function to enable operations of a mobile phone as a mobile station by using a hands-free function.

As such a mobile communication system, there has been proposed a system which can switch data communication to audio communication from a terminal device which is connectable to a mobile station through a wire and performs data communication by using a hands-free function (see, e.g., Jpn. Pat. Appln. KOKAI Publication No. 2001-230831).

In the system disclosed in this reference, packet communication is performed between a mobile communication network and a terminal device through a mobile station. When an audio incoming signal is transmitted from the mobile communication network to the mobile station during the packet communication, the mobile station transmits a packet communication cancel command to the terminal device via a line connected through a wire. Subsequently, the mobile station transmits a hands-free confirmation to the terminal device. As a result, the terminal device performs hands-free audio communication with the mobile communication network through the mobile station. Consequently, even if there is an audio incoming call during the packet communication, the hands-free audio communication can be effected by using the terminal device.

Further, as a prior art, there has been proposed a communication system which has a mobile phone of a mobile communication system and a wrist watch type terminal connectable to this mobile phone by wireless through short-distance wireless communication, and respectively performs data communication and audio communication (see, e.g., Jpn. Pat. Appln. KOKAI Publication No. 2002-125039).

In the communication system disclosed in this reference, data communication is carried out between a base station and the wrist watch type terminal through the mobile phone. In this case, a wireless communication service based on the Bluetooth (trademark) standard concerning non-call services are executed between the mobile phone and the write watch type terminal.

Furthermore, audio incoming calls and incoming responses are performed between the base station and the write watch type terminal through the mobile phone. In this case, when an audio incoming call is transmitted from the base station to the mobile phone, a wireless communication service based on the Bluetooth standard concerning an audio incoming call is executed between the mobile phone and the write watch type terminal.

Moreover, audio communication based on a hands-free method is effected between the base station and the write watch type terminal through the mobile phone. In this case, a wireless communication service based on the Bluetooth standard concerning hands-free audio communication is executed between the mobile phone and the wrist watch type terminal.

The communication system according to the above-described prior art has the following problems.

That is, when the mobile station is connected with the terminal device through a wire, there is a problem that the connection line is an obstacle when operating the terminal device.

Additionally, when the mobile phone is connected with the terminal device through short-distance wireless communication based on the Bluetooth standard, standardized wireless communication services can be utilized. Specifically, in the Bluetooth standard, there are prepared wireless communication service profiles such as a standardized DUN (Dial Up Network) profile for data communication services, an HFP (Hands Free Profile) for hands-free audio communication services and others.

However, in the communication system utilizing short-distance wireless communication based on, e.g., the Bluetooth standard, there is not prepared a procedure concerning a suspension of data communication between the mobile station and the terminal device. Therefore, when an audio signal is received during data communication, there is a problem that switching to an audio incoming call response cannot be performed by the terminal device.

An object of the present invention is to provide a method of communication control for interrupting data communication and switching to audio communication during the data communication between a mobile station and a terminal device in a wireless communication system.

The method comprises the steps of establishing a session of a data communication service based on the short-distance wireless communication with the terminal device, and executing data communication by means of the mobile station; determining whether there is an audio incoming call signal transmitted from the base station during the data communication with the terminal device by means of the mobile station; and notifying that there is an audio incoming call during the data communication by transmitting a session open request of the data communication service to the terminal device 3 when the audio incoming call signal is received by means of the mobile station, characterized in that establishing a session of a data communication service based on the short-distance wireless communication with the mobile station, and executing data communication by means of the terminal device; determining whether there is the session open request transmitted from the mobile station during the data communication with the mobile station by means of the terminal device; and judging that there is an audio incoming call during the data communication when the session open request is received by means of the terminal device.

This summary of the invention does not necessarily describe all necessary features so that the invention may also be a sub-combination of these described features.

The invention can be more fully understood from the following detailed description when taken in conjunction with the accompanying drawings, in which:
FIGS. 1 to 3 are views schematically showing a communication system concerning first and second embodiments according to the present invention;
FIG. 4 is a block diagram showing a primary part of a mobile station concerning each embodiment;
FIG. 5 is a block diagram showing a primary part of a terminal device concerning each embodiment;
FIGS. 6 and 7 are timing charts illustrating a wireless communication sequence concerning the first embodiment;
FIG. 8 is a timing chart illustrating a wireless communication sequence between the mobile station and the terminal device concerning the first embodiment;
FIG. 9 is a timing chart illustrating a wireless communication sequence concerning the second embodiment; and
FIG. 10 is a timing chart illustrating a wireless communication sequence between the mobile station and the terminal device concerning the second embodiment.

First and second embodiments will now be described hereinafter with reference to the accompanying drawings.

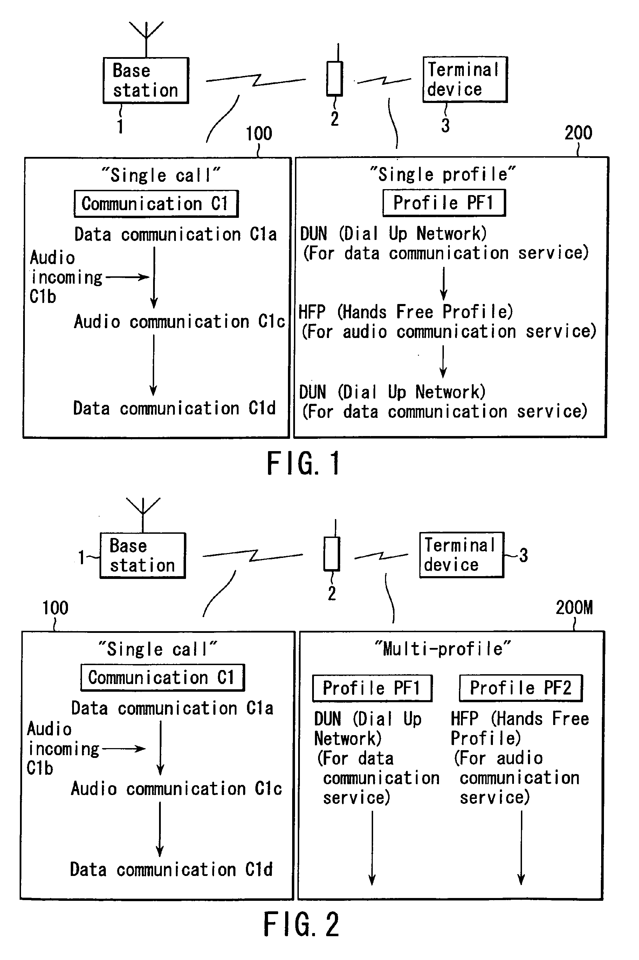

FIGS. 1 to 5 are views showing a structure of each of a wireless communication system, a mobile station and a terminal device concerning each embodiment.

FIGS. 1 to 3 are views illustrating a structure of this wireless communication system applied to a mobile communication system.

This system includes a base station 1, a mobile station 2 connectable to this base station 1 by wireless, and a terminal device 3 connectable to this mobile station 2 by wireless through short-distance wireless communication. It is to be noted that a large number of the base stations 1, the mobile station 2 and the terminal devices 3 exist, the number of each member is determined as one for convenience's sake.

The terminal device 3 is a device capable of performing audio calls using a hands-free function and data communication based on, e.g., the Bluetooth standard and data communication. Specifically, the terminal device 3 is a portable computer having a hands-free function or a car navigation system having a hands-free function.

The mobile station 2 is specifically a mobile phone, and executes data communication or audio communication with the base station 1 through mobile communication. The terminal device 3 can operate the mobile station 2 by using the hands-free function and perform data communication or audio communication with the base station 1 through the mobile station 2.

As mobile communication 100 between the base station 1 and the mobile station 2, a single call which means that the number of communications which can be simultaneously processed is one is assumed. Therefore, when an audio incoming C1b is transmitted from the base station 1 during communication of data communication C1a of "communication C1" from the base station 1 to the mobile station 2, the mobile station 2 temporarily interrupts the data communication C1a and switches to audio communication C1c. Then, when the audio communication C1c is terminated, processing to return to data communication C1d is performed.

Further, short-distance wireless communication (which may be referred to as BWC hereinafter) between the mobile station 2 and the terminal device 3 comprises respective profiles PF of a DUN profile for data communication services and an HFP for hands-free audio communication services included in the Bluetooth standard. However, each profile is a single profile, the number of profiles cannot be processed simultaneously, and the DUN profile and the HFP must be changed over as a "profile PF1".

The data communication C1a received by the mobile station 2 is transmitted from the mobile station 2 to the terminal device 3 by using the DUN profile of the BWC function. Furthermore, the audio communication C1c received by the mobile station 2 is transmitted from the mobile station 2 to the terminal device 3 by using the HFP profile of the BWC function. Therefore, when switching from the data communication C1a to the audio communication C1c, since the "profile PF1" of the mobile station 2 is also a single profile, the DUN profile is switched to the HFP profile.

Meanwhile, in the mobile communication between the base station 1 and the mobile station 2, when an audio incoming C1b arrives during reception of the data communication C1a and an application to temporarily interrupt the data communication C1a is generated, the data communication C1a requires temporal interruption processing instead of normal terminal in the mobile station 2 even in the wireless communication based on the BWC between the mobile station 2 and the terminal device 3.

FIG. 2 shows a system where the mobile communication between the base station 1 and the mobile station 2 is a single call but the BWC between the mobile station 2 and the terminal device 3 is multi-profiles PF1 and PF2.

That is, the mobile station 2 includes a "profile PF1" and a "profile PF2" which can be simultaneously processed as a BWC function 200M between itself and the terminal device 3. Based on the multi-profiles, the wireless communication can be simultaneously performed between the mobile station 2 and the terminal device 3.

DUN profiles for data communication services are continuously assigned to the profile PF1. Moreover, HFPs for hands-free audio communication services are continuously assigned to the profile PF2.

Therefore, in the wireless communication from the mobile station 2 to the terminal device 3, even if the data communication C1a is switched to the audio communication C1c, switching of communication does not have to be performed because of the multi-profiles. The transmission data communication C1a to the terminal device 3 is executed by using the DUN profile of the profile PF1. Additionally, the audio communication C1a transmitted to the terminal device 3 is executed by using the HFP of the profile PF2.

However, when the audio incoming C1b arrives during reception of the data communication C1a and an application to temporarily interrupt the data communication C1a is generated, the mobile station 2 requires processing to temporarily interrupt the data communication C1a on the DUN profile in the wireless communication with the terminal device 3 in place of normal termination.

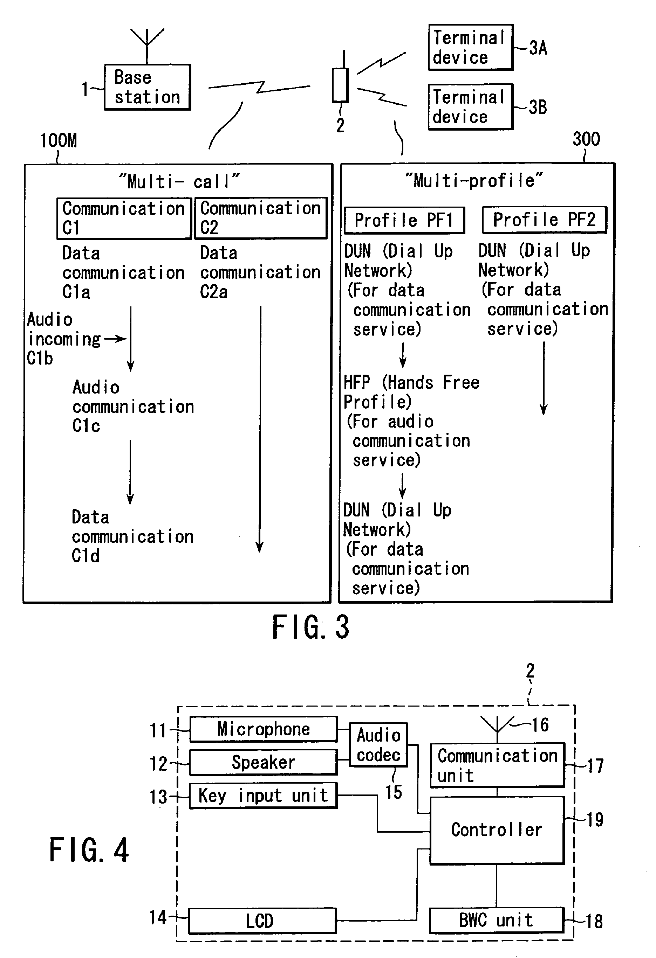

FIG. 3 shows a system in cases where the mobile communication between the base station 1 and the mobile station 2 is multi-calls and the wireless communication between the mobile station 2 and the terminal device 3 is also multi-profiles. However, this system has a structure in which a plurality of terminal devices 3A and 3B are connected to the mobile station 2.

That is, mobile communication 100M between the base station 1 and the mobile station 2 is performed through a multi-call communication channel by which communication C1 and communication C2 can be simultaneously transmitted/received. For example, the data communication C1a is assigned to the communication C1. Furthermore, the data communication C2a is assigned to the communication C2.

When the audio incoming C1b is generated during reception of the data communication C1a of the communication C1, the mobile station 2 switches the data communication C1a to the audio communication C1c in the communication C1. On the other hand, the communication C2 is kept being used for transmitting/receiving the data communication C2a as it is.

As the BWC function between the mobile station 2 and the terminal devices 3A and 3B, there are provided the profile PF1 and the profile PF2 which can be simultaneously processed, and the wireless communication can be simultaneously achieved by using the multi-profiles.

Here, the profile PF1 is used for the terminal device 3A and, e.g., the DUN profile is assigned. Additionally, the profile PF2 is used for the terminal device 3B and the DUN profile is likewise assigned.

It is to be noted that either the single profile or the multi-profile can be used for the both terminal devices 3A and 3B.

### (Structure of Mobile Station)

FIG. 4 is a block diagram showing a structure of the mobile station (mobile phone in this example) 2.

A primary part of the mobile station 2 comprises a microphone 11, a speaker 12, a key input unit 13, an LCD (liquid crystal display) 14, an audio codec 15, an antenna 16, a wireless communication unit 17, a BWC unit 18 and a controller 19.

The microphone 11 and the speaker 12 are audio input/output devices for calls performed by a user. The speaker 12 also operates as an output device used to notify a user of a ringing tone of a data incoming call or an audio incoming call from the base station 1.

The audio codec 15 is connected with the microphone 11 and the speaker 12. The audio codec 15 executes encoding of audio signals inputted from the microphone 11. Furthermore, the audio codec 15 execute decoding of audio signals to be outputted to the speaker 12.

The key input unit 13 is an input device for manual operations performed by a user. The LCD 14 is a display device used for operation display using the key input unit 13, data display for data communication and others.

The antenna 16 transmits/receives electric waves for mobile communication with the base station 1. The wireless communication unit 17 executes modulation and demodulation processing or the like relative to signals transmitted/received by the antenna 16.

The BWC unit is a device used to perform short-distance wireless communication based on the Bluetooth standard in this example, and executes transmission/reception of electric waves to/from the terminal device 3 and processing such as modulation and demodulation.

The controller 19 comprises a microprocessor (CPU), an I/O device, a memory and others, and executes an audio input/output control with the audio codec 15. Moreover, the controller 19 performs a man-machine interface control such as a key input control with the key input unit 13, a display output control with the LCD 14 or the like.

Additionally, the controller 19 performs a mobile communication control with the base station 1 by controlling the communication unit 17. That is, the controller 19 receives signals transmitted from the base station 1 through the communication unit 17. Further, the controller 19 transmits through the communication unit 17 signals to be supplied to the base station 2.

Specifically, wireless signals transmitted from the base station 1 are received by the antenna 16, and transmitted to the communication unit 17. The communication unit 17 transmits signals obtained by executing demodulation processing or the like relative to the received wireless signals to the controller 19.

Furthermore, the communication unit 17 executes encoding processing or the like relative to the signals to be supplied to the base station 2, converts them into wireless signals, and transmits them from the antenna 16 to the base station 1.

Here, as the wireless signals received by the mobile station 2 from the base station 1, there are a data incoming call signal, data in data communication, an audio incoming call signal, an audio signal in audio communication and others.

On the other hand, as the wireless signals transmitted by the mobile station 2 to the base station 1, there are a response signal with respect to a data incoming call signal, transmission data in data communication, a data communication temporal interruption signal, a response signal with respect to an audio incoming call signal, an audio communication disconnection signal, a data communication resume signal, a data communication disconnection signal and others.

Moreover, the controller 19 performs a short-distance wireless communication control with the terminal device 3 by controlling the BWC unit 18. That is, the controller 19 receives signals transmitted from the terminal device 3 through the BWC unit 18. Additionally, the controller 19 supplies signals to be transmitted to the terminal device 3 through the BWC unit 18.

Specifically, wireless signals transmitted from the terminal device 3 are received by the BWC unit 18. The BWC unit 18 performs demodulation processing or the like, and transmits the converted signals to the controller 19.

Further, the BWC unit 18 performs modulation processing or the like with respect to signals to be transmitted to the terminal device, and supplies the converted wireless signals to the terminal device 3.

As the wireless signals received by the mobile station 2 from the terminal device 3, there are a response signal relative to a data connection request, a session establishment signal, data in data communication, a response signal relative to a data service disconnection request, a hands-free connection request signal, an incoming response signal relative to an audio call, an audio signal in audio communication, a hands-free OFF signal, a data service disconnection request signal and others.

As the wireless signals transmitted by the mobile station 2 to the terminal device 3, there are a data connection request signal, a session establishment signal, data in data communication, a data service disconnection request signal, a response signal relative to a hands-free connection request, an audio call signal, a response signal relative to a hands-free OFF signal, a response signal relative to a data service disconnection request and others.

### (Structure of Terminal Device)

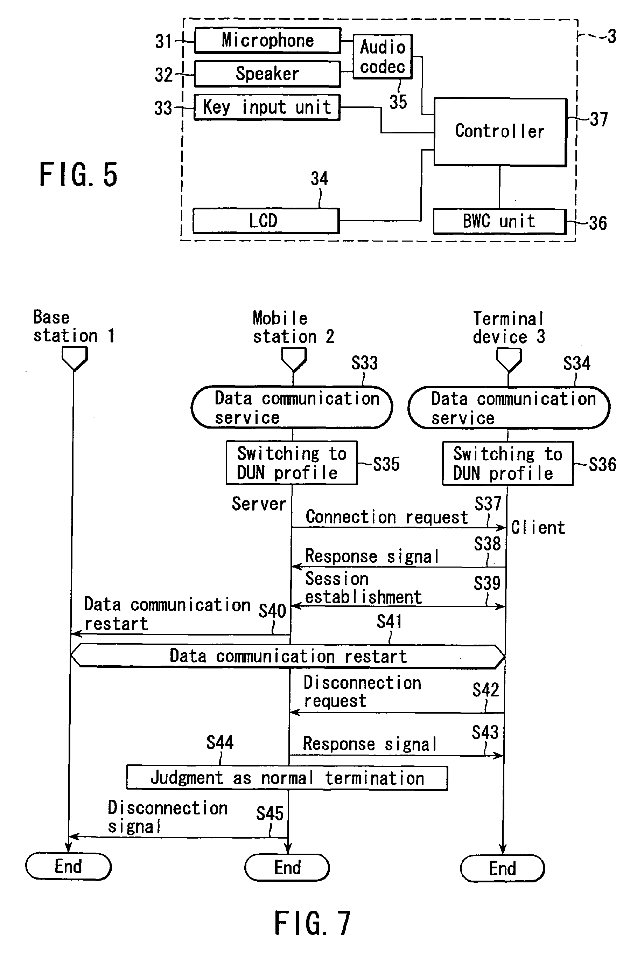

FIG. 5 is a block diagram showing a structure of the terminal device 3.

A primary part of the terminal device 3 comprises a microphone 31, a speaker 32, a key input unit 33, an LCD 34, an audio codec 35, a BWC unit 36, and a controller 37.

The microphone 31 and the speaker 32 are input/output devices for hands-free calls performed by a user. Further, the speaker 32 also operates as an output device which notifies a user of a ringing tone of an audio incoming call from the mobile station 2.

The audio codec 35 is connected with the microphone 31 and the speaker 32. The audio codec 35 executes encoding of audio signals inputted from the microphone 31. Furthermore, the audio codec 35 executes decoding of audio signals to be outputted to the speaker 32.

The key input unit 33 is an input device for manual operations by a user. The LCD 34 is a display device used to perform operation display using the key input unit 33, data display of data communication and others.

The BWC unit 36 is a device used to carry out short-distance wireless communication based on the Bluetooth standard with the mobile station 2, and executes transmission/reception of electric waves and processing such as modulation and demodulation.

The controller 37 comprises a microprocessor (CPU), an I/O device, a memory and others, and executes an audio input/output control with the audio codec 35. Moreover, the controller 37 performs man-machine interface controls such as a key input control with the key input unit 33, a display output control with the LCD 34 or the like.

The controller 37 carries out a short-distance wireless communication control with the mobile station 2 by controlling the BWC unit 36. That is, the controller 37 receives signals transmitted from the base station 2 through the BWC unit 36. Additionally, the controller 37 transmits through the BWC unit 36 signals to be supplied to the base station 2.

Specifically, wireless signals transmitted from the base station 2 are received by the BWC unit 36. The BWC unit 36 effects demodulation processing or the like, and transmits the converted signals to the controller 37. Further, the BWC unit 36 performs modulation processing or the like with respect to signals to be transmitted to the mobile station 2, and transmits the converted wireless signals to the mobile station 2.

As the wireless signals received by the terminal device 3 from the mobile station 2, there are a data connection request signal, a session establishment signal, data in data communication, a data service disconnection request signal, a response signal relative to a hands-free connection request, an audio call signal, a response signal relative to a hands-free OFF signal, a response signal relative to a data service disconnection request and others.

As the wireless signals transmitted by the terminal device 3 to the mobile station 2, there are a response signal relative to a data connection request, a session establishment signal, data in data communication, a response signal relative to a data service disconnection request, a hands-free connection request signal, an incoming response signal relative to an audio call, an audio signal in audio communication, a hands-free OFF signal, a data service disconnection request signal and others.

### (First Embodiment)

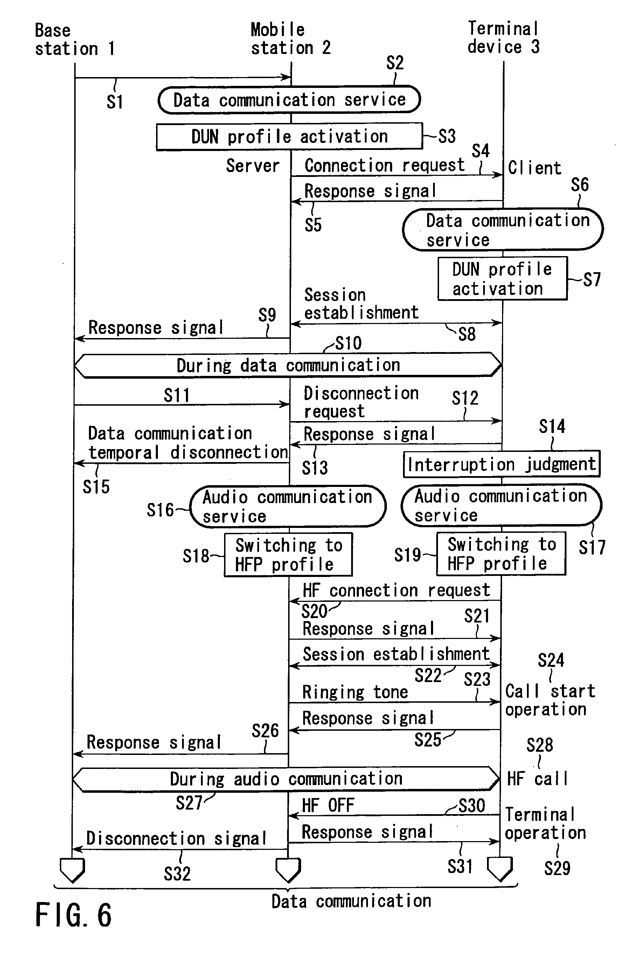

An operation of a communication system concerning the first embodiment will now be described hereinafter with reference to FIGS. 6 to 8.

A communication control of this embodiment includes a procedure to notify the terminal device 3 of opening of a session and switch the data communication to the audio communication when there is an audio incoming during reception of the data communication by the mobile station 2.

The detailed operation of a first mobile communication system depicted in FIG. 1 will now be described with reference to FIGS. 6 to 8.

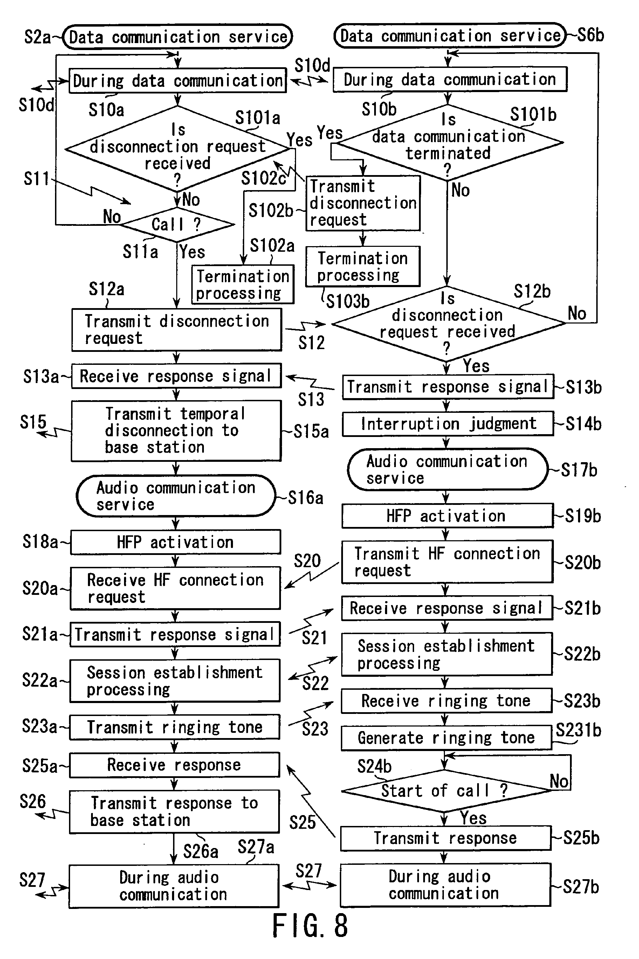

FIGS. 6 and 7 show a switching sequence from the data communication to the audio communication in such a mobile communication system as illustrated in FIG. 1. FIG. 8 is a timing chart showing operations of the mobile station 2 and the terminal device 3 with respect to a part of the sequence.

Here, as described above, the wireless mobile communication is executed between the base station 1 and the mobile station 2. The short-distance wireless communication (BWC) is executed between the mobile station 2 and the terminal device 3. In the communication control of this BWC, a control signal based on the Bluetooth standard is used.

The communication control described below is executed by the controller 19 in the mobile station 2. Further, the communication control is executed by the controller 37 in the terminal device 3.

First, a description will be given as to an operation of the data communication between the base station 1 and the terminal device 3 through the mobile station 2 with reference to FIG. 6.

The base station 1 transmits a data incoming call S1 to the mobile station 2 in the data communication. Upon receiving this data incoming call S1, the mobile station 2 enters a data communication service S2 state. The mobile station 2 starts processing to set the BWC with the terminal device 3 to the data communication service.

First, the mobile station 2 performs a DUN profile activation S3 as the BWC function. Thereafter, this DUN profile state continues until it is switched to another profile. The mobile station 2 operates as a server in the BWC, and transmits a data service connection request S4 to the terminal device 3 based on the BWC procedure.

Upon receiving this data service connection request S4, the terminal device 3 operates as a client in the BWC, and transmits a response signal S5 to the mobile station 2. Then, it enters a data communication service S6 state, and starts processing to set the BWC communication with the mobile station 2 to the data communication service.

First, the terminal device 3 performs a DUN profile activation S7 as the BWC function. Thereafter, this DUN profile state continues until this profile is switched to another profile.

It is to be noted that a procedure until a session establishment S8 of the data communication between the mobile station 2 and the terminal device 3 is not restricted to such a procedure as shown in FIG. 6. That is, for example, it may be a procedure in which the terminal device 3 transmits the data service connection request S4 to the mobile station 2 in an opposite direction on an initial stage, the mobile station 2 receives this request and transmits a response signal S5 to the terminal device 3.

Then, the mobile station 2 and the terminal device 3 carry out the session establishment S8, and a preparation for execution of the data communication in the BWC is established. When this preparation is established, the mobile station 2 transmits a response signal S9 relative to a data communication call S1 to the base station 1.

As a result, data communication S10 is performed between the base station 1 and the terminal device 3 through the mobile station 2.

### (BWC)

A description will now be given as to operations of the mobile station 2 and the terminal device 3 from the data communication S10 shown in FIG. 6 to a hands-free (HF) call S28 with reference to FIG. 8.

FIG. 6 shows an operation when there is an audio incoming interruption S11 between the data communication S10 and the HF call S28, and regular data communication termination operation is not illustrated.

FIG. 8 shows operations of a judgment S14B upon the audio incoming interruption in the data communication and of a judgment upon the regular termination of the data communication.

Here, a suffix which is a character a is given to a step number in FIG. 8 denoting the same sequence in FIG. 6 on the mobile station 2 side, and a suffix which is a character b is given to the same on the terminal device 3 side.

First, when the data communication S10 starts between the base station 1 and the terminal device 3, the mobile station 2 transmits data S10d received from the base station 1 to the terminal device 3 (S10a).

The terminal device 3 receives the data S10d from the mobile station 2 (S10b) .

The mobile station 2 checks (S101a) a data service disconnection request which is a regular terminal procedure of the BWC transmitted from the terminal device 3 and checks (S11a) an audio incoming call S11 transmitted from the base station 1 during this data communication processing.

The terminal device 3 confirms a content of the data S10d, checks (S101b) the data communication termination and checks (S12b) the data service disconnection request S12 transmitted from the mobile station 2 during this data communication processing.

A description will now be given as to a case of the regular termination of the data communication.

Upon confirming the content of the data S10b and detecting the data communication termination (YES at S101b), the terminal device 3 transmits a data service disconnection request S102c to the mobile station 2 (S102b). This is a standard procedure determined in the Bluetooth standard, and defined as a sequence for transmission from a client (terminal device 3) to a server (mobile station 2) when the data communication is all completed.

The terminal device 3 receives a response signal (not shown) from the mobile station 2, and terminates the data communication (S103b).

On the other hand, upon receiving the data service disconnection request S102c from the terminal device 3 (YES at S101a), the mobile station 2 transmits the response signal to the terminal device 3, thereby terminating the data communication (S102a). This is a standard procedure determined in the Bluetooth standard, and means that the data communication is all completed.

A description will now be given as to a case that there is an audio incoming during the data communication S10.

When an audio call from the mobile communication network to the mobile station 2 is generated during the data communication S10, the base station 1 transmits an audio incoming call S11 to the mobile station 2 (see FIG. 6).

When the mobile station 2 receives the audio incoming call S11 from the base station 1 (YES at S11a) in a state that it does not receive the data service disconnection request S102c from the terminal device 3 (NO at S101a), it transmits a data service disconnection request S12 used to open a session to the terminal device 3 in order to temporarily interrupt the data communication S10 with the terminal device 3 (S12a).

When the terminal device 3 receives the data service disconnection request S12 from the mobile station (YES at S12b) in a state that the data communication is not terminated (NO at S101b), it transmits a response signal S13 to the mobile station 2 (S13b).

Meanwhile, as to this data service disconnection request S12, a sequence for transmission from a server (mobile station 2) to a client (terminal device 3) is not defined in the standard procedure determined in the Bluetooth standard. In the standard procedure, the data service disconnection request is defined as a sequence for transmission from a client (terminal device 3) to a server (mobile station 2) when the data communication is all terminated.

Therefore, the terminal device 3 recognized that this request is not defined in the proper Bluetooth standard, and determines that there is an audio incoming interruption (S14b). Then, the terminal device 3 shifts to a state to receive an audio communication service (S17b).

Furthermore, the mobile station 2 also receives a response signal S13 from the terminal device 3 (S13a), and transmits a data communication temporal disconnection S15 to the base station 1 (S15a) in order to temporarily disconnect the data communication S10 with the base station 1. Then, the mobile station 2 performs the audio communication service (S16a).

The mobile station 2 starts processing to set the BWC with the terminal device 3 to the audio communication service. First, the mobile station 2 switches the already started DUN profile activation S3 to an HF profile activation because of the single profile (S18a). Thereafter, the operation state using this HF profile continues until this profile is switched to another profile.

When the audio communication service S17b starts, the terminal device 3 also commences processing to set the BWC with the mobile station 2 to the audio communication service. First, the terminal device 3 switches the already started DUN profile activation S7 to the HF profile activation because of the single profile (S19b). Thereafter, the operation state using this HFP profile continues until this profile is switched to another profile.

Then, the mobile station 2 and the terminal device 3 execute transmission/reception of a hands-free (HF) connection request S20 (S20a, S20b), transmission/reception of a response signal S21 (S21a, S21b) and processing of a session establishment S22 (S22a, S22b) based on the Bluetooth standard procedure, thereby establishing the audio communication in the BWC.

When this audio communication is achieved, the mobile station 2 transmits a ringing tone S23 to the terminal device 3 (S23a). Upon receiving this ringing tone S23, the terminal device 3 generates it as a ringing tone, and a user performs a call start operation S24 by operating a call start key or the like.

The terminal device 3 transmits it as a call start response signal S25 to the mobile station 2 (S25b). It is to be noted that the terminal device 3 may automatically transmit the call start response signal S25 to the mobile station 2 without the call start operation S24 using the call start key or the like by a user (S25b).

Upon receiving the incoming response signal S25 (S25a), the mobile station 2 transmits an incoming response signal S26 to the base station 1 (S26a). As a result, audio communication S27 through the base station 1, the mobile station 2 and the terminal device 3 is executed (S27a, S27b). A user executes a hands-free (HF) call S28 by using the terminal device 3 (see FIG. 6).

Then, an operation to terminate the audio communication service will now be described with reference to FIG. 7.

First, as shown in FIG. 6, when the audio call (S28) is terminated, a user executes a termination operation by operating keys of the terminal device 3 (S29).

The terminal device 3 transmits it as a hands-free (HF) OFF to the mobile station 2 (S30). Upon receiving HFOFF (S30), the mobile station 2 transmits a response signal to the terminal device 3 (S31), and further transmits a disconnection signal of the audio communication to the base station 1 (S32). As a result, the mobile station 2 and the terminal device 3 terminate the audio communication service.

Thereafter, the mobile station 2 and the terminal device 3 enter states of the data communication service S33 and the data communication service S34 depicted in FIG. 7 in order to restart the temporarily interrupted data communication.

When the mobile station 2 enters the state of the data communication service S33, it switches the HF profile S18 to the DUN profile because of the single profile (S35).

Upon entering the state of the data communication service S34, the terminal device 3 likewise switches the HF profile S19 to the DUN profile because of the single profile (S36).

Then, the mobile station 2 (server) and the terminal device 3 (client) perform processing of transmission/reception of a data service connection request S37, transmission/reception of a response signal S38 and a session establishment S39 based on the Bluetooth standard procedure, thereby achieving the data communication in the BWC.

When this data communication is achieved, the mobile station 2 transmits a data communication resume signal to the base station 1 (S40). As a result, the data communication S41 is restarted between the base station 1 and the terminal device 3 through the mobile station 2.

When the data communication is all terminated, the terminal device 3 (client) transmits a data service disconnection request to the mobile station 2 (server) (S42). The mobile station 2 which has received this request S42 transmits a response signal to the terminal device 3 (S43).

Upon receiving this data service disconnection request S42, the mobile station 2 judges that the data communication in the Bluetooth communication is normally terminated (S44). Then, the mobile station 2 transmits a disconnection signal to the base station 1 (S45), and terminates all the communications.

Incidentally, in cases where the data communication is temporarily interrupted in order to perform the audio communication and the data communication is not restarted when this audio communication is terminated, it is good enough for the mobile station 2 and the terminal device 3 to perform the termination processing before they enter the states of the data communication service S33 and the data communication service S34.

As described above, according to the first embodiment, when the data service disconnection request S12 is transmitted from the mobile station by using the standard profile based on the Bluetooth standard, the terminal device judges it as an audio incoming interruption during the data communication. As a result, when there is an audio incoming All during the data communication S10, a user can temporarily interrupt the data communication by just operating the terminal device 3 without manipulating the mobile station (mobile phone) 2 and execute the audio incoming response and the hands-free audio communication using the terminal device 3.

It is to be noted that the mobile station 2 and the terminal device 3 can simultaneously process the DUN profile and the HF profile based on the Blue standard in case of the mobile communication system using the signal call and the multi-profile shown in FIG. 2, and hence no switching is required.

Therefore, in the sequence diagrams of FIGS. 6 and 7, the mobile station 2 and the terminal device 3 do not have to perform the DUN profile activation (S3), the DUN profile activation (S7), the HFP profile switching (S18), the HFP profile switching (S19), the DUN profile switching (S35) and the DUN profile switching (S36).

It is good enough for the mobile station 2 and the terminal device 3 to activate both the DUN profile and the HF profile on the initial stage, e.g., with a timing before the data communication service S2 and the data communication service S6. However, since the data service disconnection request S12 in the DUN profile is not included in the Bluetooth standard procedure, the terminal device 3 judges the data service disconnection request S12 as an audio incoming interruption.

A description will now be given as to processing operations of the "communication C1" of the multi-call and the "profile PF1" of the multi-profile in case of a third mobile communication system which processes the multi-call and the multi-profile shown in FIG. 3.

Since the mobile station 2 processes the multi-profile, it is good enough for the mobile station 2 to activate both the DUN profile and the HFP profile with, e.g., a timing before the data communication service S2 and the data communication service S6 in FIGS. 6 and 7 like the example depicted in FIG. 2.

In this case, the operation differs depending on whether the terminal device 3 processes the multi-profile or the single profile.

If the terminal device 3 processes the multi-profile, it is good enough for the terminal device 3 to activate both the DUN profile and the HFP profile with, e.g., a timing before the data communication service S6 in FIGS. 6 and 7 like the example of the multi-profile shown in FIG. 2.

On the other hand, if the terminal device 3 processes the single profile, it is good enough to perform activation and switching of the DUN profile and the HFP profile in accordance with the sequence depicted in FIGS. 6 and 7.

However, since the data service disconnection request S12 in the DUN profile is not included in the Bluetooth standard procedure, the terminal device 3 judges the data service disconnection request S12 as an audio incoming interruption.

As described above, even in case of the multi-profile, the mobile station can notify the terminal device of the audio incoming interruption during the data communication by using the Bluetooth standard profile.

### (Second Embodiment)

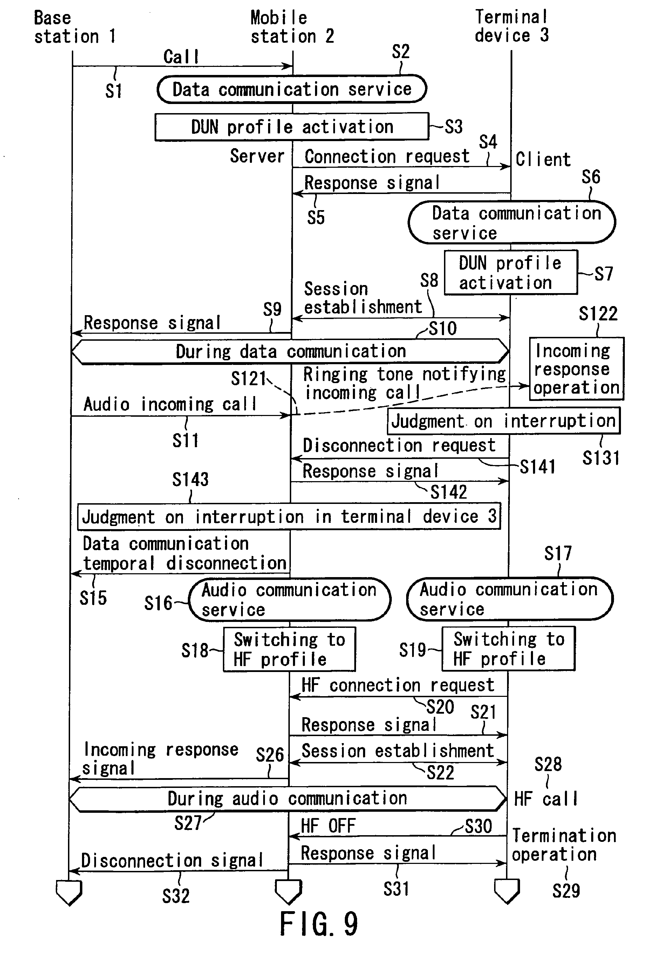

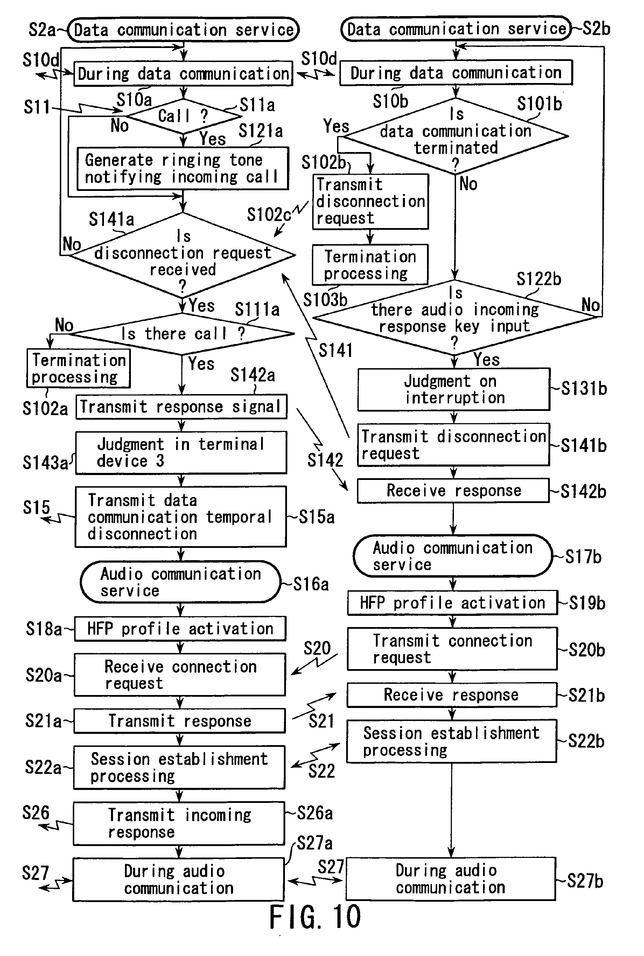

FIGS. 9 and 10 are views showing timing charts concerning a second embodiment.

This embodiment includes a procedure that the terminal device 3 notifies the mobile station 2 of a session opening when there is an audio incoming during the data communication.

A description will now be given as to an operation of this embodiment in the mobile communication system depicted in FIG. 1 with reference to FIGS. 9 and 10.

FIG. 9 shows a sequence such as an audio incoming response during the data communication in the mobile communication system shown in FIG. 1. FIG. 10 shows a timing chart illustrating operations of the mobile station 2 and the terminal device 3 with respect to a part of the sequence depicted in FIG. 9.

Differences from the first embodiment will be mainly described hereinafter with reference to FIGS. 9 and 10. It is to be noted that like reference numerals denote parts equal to those in the first embodiment.

The sequence in FIG. 9 shows an example in which there is an audio incoming interruption during the data communication from the data communication S10 to the hands-free (HF) call S28, but does not show a regular termination operation of the data communication.

FIG. 10 shows operations of a judgment upon an audio incoming interruption during the data communication and a judgment upon a regular termination of the data communication.

Step numbers with suffixes in the flowchart of FIG. 10 denote parts equal to those in the sequence of FIG. 9.

Operations from a data incoming call S1 to a response signal S9 in FIG. 9 are the same as those in the first embodiment, thereby eliminating their explanation.

Then, as shown in FIG. 10, the mobile station 2 which has received the data S10d from the base station 1 during the data communication S10 transmits this data S10d to the terminal device 3 (S10a). The terminal device 3 receives the data S10 from the mobile station 2 (S10b).

The mobile station 2 checks an audio incoming call S11 transmitted from the base station (S11a) and checks a data service disconnection request S102c transmitted from the terminal device 3 (S141a) during this data communication processing.

Further, the terminal device 3 confirms a content of the data S10d, checks whether it is a data communication termination (S101b) and checks an audio incoming response key input of the terminal device 3 (S122b) during this data communication processing.

A description will now be given as to a case of the regular termination of the data communication.

When the terminal device 3 confirms the content of the data S10d and detects the data communication termination (YES at S101b), it transmits the data service disconnection request S102c to the mobile station 2 (S102b). This is a standard procedure determined in the Bluetooth standard, and it is defined as a sequence for transmission from a client (terminal device 3) to a server (mobile station 2) when the data communication is all terminated.

Upon receiving a response signal (not shown) from the mobile station 2, the terminal device 3 terminates the data communication (S103b) .

The mobile station 2 receives the data service disconnection request S102c transmitted from the terminal device 3 (YES at S141a). This data service disconnection request S102c is a standard procedure determined in the Bluetooth standard, and it originally means that the data communication is all terminated.

Here, in this embodiment, the mobile station 2 does not receive the data service disconnection request S102c as the regular termination as it is, but it checks whether there is an audio incoming call S11 from the base station 1 on a stage before receiving the data service disconnection request S102c (S11a in FIG. 10). Furthermore, it checks the disconnection request S102c on the following stage (S111a).

When there is no audio incoming call S11 (NO at S111a), the mobile station 2 judges it as the regular termination of the data communication, and transmits the response signal to the terminal device 3, thereby bringing the data communication to completion (S102a).

A description will now be given as to a case that there is an audio incoming during the data communication S10d.

When an audio call from the mobile network to the mobile station 2 is generated during this data communication S10, the base station 1 transmits an audio incoming call S11 to the mobile station 2.

The mobile station 2 checks the audio incoming call S11 transmitted from the base station 1 during this data communication S10a (S11a). Upon receiving the audio incoming call S11 (YES at S11a), it stores it and generates a ringing tone notifying an incoming call S121 from a speaker or the like of the mobile station 2 (S121a). Then, it enters a state to wait for the data service disconnection request S102c from the terminal device 3.

The mobile station 2 and the terminal device 3 are placed at positions close to each other, and a user hears the ringing tone notifying an incoming call S121 generated from the base station 2 and executes an incoming response key input by operating an audio incoming response key provided to the terminal device 3 as shown in FIG. 9 (S122).

The terminal device 3 confirms the content of the data S10d. If the content does not correspond to the data communication termination (NO at S101b), the terminal device 3 further checks the audio incoming response key input S122 (S122b). Then, if input of the audio incoming response key input 122 is detected (YES at S122b), it is determined as an audio incoming interruption (S131b).

Subsequently, the terminal device 3 (client) transmits a data service disconnection request S141 to the mobile station 2 (server) (S141b). This data service disconnection request S141 originally means that the data communication is all terminated in the standard procedure determined in the Bluetooth standard.

Here, in this embodiment, this request is used as a signal notifying the mobile station 2 that the terminal device 3 has judged the audio incoming interruption during the data communication S10.

Upon receiving this data service disconnection request S141 (YES at S141a), the mobile station 2 checks whether there is an audio incoming call S11 on a stage before receiving the data service disconnection request S141 (S111a). Then, when the reception of the audio incoming call S11 is stored (YES at S111a), the mobile station 2 transmits a response signal S142 to the terminal device 3 (S142a).

Subsequently, if the reception of the audio incoming call S11 is stored (YES at S111a), the mobile station 2 recognized that the judgment on the audio incoming interruption during the data communication has been made in the terminal device 3 (S143a).

Then, the mobile station 2 transmits a data communication temporal disconnection signal S15 to the base station 1 (S15a), and starts an audio communication service S16 (S16a).

Moreover, the terminal device 3 receives the reception signal S142 from the mobile station 2 (S142b), and starts an audio communication service S17 (S17b).

Then, the mobile station 2 and the terminal device 3 respectively activate and switch the HF profile in order to se the Bluetooth communication to the audio communication service (S18a, S19a). Additionally, the mobile station 2 and the terminal device 3 perform transmission/reception of a hands-free connection request S20 (S20a, S20b), transmission/reception of a response signal S21 (S21a, S21b) and processing of a session establishment S22 (S22a, S22b) based on the Bluetooth procedure, thereby achieving the audio communication in the Bluetooth communication.

When this audio communication is achieved, the mobile station 2 immediately transmits an incoming response S26 to the base station 1 (S26a). As a result, audio communication S27 is performed between the base station 1 and the terminal device 3 through the mobile station 2 (S27a, S27b), and a user executes a hands-free (HF) call by using the terminal device 3 (S28).

Operations from the HF call S28 to restart of the data communication (S40 in FIG. 7) are the same as those in the first embodiment, thereby eliminating their explanation.

As described above, according to the second embodiment, the terminal device 3 notifies the mobile station 2 that the judgment on the audio incoming interruption has been made during the data communication by using the Bluetooth standard profile. As a result, when there is an audio incoming during the data communication, a user can temporarily interrupt the data communication and execute the audio incoming response using the terminal device and the hands-free audio communication by just operating the terminal device 3 without manipulating the mobile station (mobile phone) 2.

It is to be noted that the mobile station 2 and the terminal device 3 can simultaneously process the DUN profile and the HF profile based on the Bluetooth standard in case of the mobile communication system shown in FIG. 2, and hence switching is not required. Therefore, in the sequence of FIG. 9, the mobile station 2 and the terminal device 3 do not have to perform activation of the DUN profile (S3), activation of the DUN profile (S7), switching of the HFP profile (S18), and switching of the HFP profile (S19).

It is good enough for the mobile station 2 and the terminal device 3 to activate both the DUN profile and the HFP profile on the initial stage, e.g., with a timing of a stage before the data communication service S2 and the data communication service S6.

However, since the data service disconnection request S141 in the DUN profile is not included in the Bluetooth standard procedure, the audio interruption is notified by the method described in conjunction with FIGS. 9 and 10.

A description will now be given as to a communication system of communication C1 of a multi-call and a profile PF1 of a multi-profile in the mobile communication system shown in FIG. 3.

The mobile station 2 processes the multi-profile, and it is good enough to activate both the DUN profile and the HF profile on an initial stage of the sequence in FIG. 9, e.g., with a timing before the data communication service S2 like the example depicted in FIG. 2.

It can be considered that the terminal device 3 processes either the multi-profile or the single profile. If the terminal device 3 processes the multi-profile, it is good enough to activate both the DUN profile and the HFP profile on an initial stage of the sequence shown in FIG. 9, e.g., with a timing before the data communication service S6 like the sample of the multi-profile depicted in FIG. 2.

If the terminal device 3 processes the single profile, it is good enough to activate and switch the DUN profile and the HF profile in accordance with the sequence shown in FIG. 9 like the example of the single profile depicted in FIG. 1.

However, since the data service disconnection request S141 in the DUN profile is not included in the Bluetooth standard procedure, the audio interruption is notified by the method described in conjunction with FIGS. 9 and 10.

As described above, even in case of the multi-profile, the mobile station can notify the terminal device of the audio incoming interruption during the data communication by using the Bluetooth standard profile.

## Claims

1. A method of communication control for a communication system having a mobile station (2) connectable to a base station (1) by wireless communication, and a terminal device (3) connectable to the mobile station (2) by short-distance wireless communication, the method comprising the steps of:
establishing (S10) a session of a data communication service based on the short-distance wireless communication with the terminal device (3), and executing data communication by means of the mobile station (2) ;
determining (S11) whether there is an audio incoming call signal transmitted from the base station (1) during the data communication with the terminal device (3) by means of the mobile station (2); and
notifying (S12) that there is an audio incoming call during the data communication by transmitting a session open request of the data communication service to the terminal device (3) when the audio incoming call signal is received by means of the mobile station (2),
**characterized in that**
establishing (S10) a session of a data communication service based on the short-distance wireless communication with the mobile station (2), and executing data communication by means of the terminal device (3);
determining (S13) whether there is the session open request transmitted from the mobile station (2) during the data communication with the mobile station (2) by means of the terminal device (3); and
judging (S14) that there is an audio incoming call during the data communication when the session open request is received by means of the terminal device (3).

2. A method according to claim 1, **characterized by** further comprising the steps of:
transmitting (S15) a temporal disconnection signal of the data communication to the base station;
executing (S22) establishment of a session of an audio communication service based on the short-distance wireless communication with the terminal device (3); and
executing (S27) audio communication with the terminal device,
these steps being performed by the mobile station (2).

3. A method according to claim 1, **characterized by** further comprising the steps of:
executing (S22) establishment of a session of an audio communication service based on the short-distance wireless communication with the mobile station (2) after judging that there is an audio incoming call during the data communication;
executing (S24) an operation to start a cal; and
executing (S27) audio communication with the mobile station (2),
these steps being performed by the terminal device (3).

4. A method according to claim 1, **characterized by** further comprising the steps of:
transmitting (S15) a temporal disconnection signal of the data communication to the base station (1);
executing (S22) establishment of a session of an audio communication service based on the short-distance wireless communication with the terminal device (3);
transmitting (S23) a ringing tone signal to the terminal device; and
transmitting (S26) an incoming response relative to the audio incoming call signal to the base station (1) after receiving a call start response transmitted from the terminal device (3) with respect to the ringing tone signal,
these steps being performed by the mobile station (2) after notifying the terminal device (3) that there is an audio incoming call during the data communication.

5. A method according to claim 1, **characterized by** further comprising the steps of:
executing (S22) establishment of a session of an audio communication service based on the short-distance wireless communication with the base station (2) after judging that there is an audio incoming call during the data communication;
executing (S24) an operation to start a call;
transmitting (S25) a call start response to the mobile station (2) with respect to a ringing tone signal after receiving the ringing tone signal from the mobile station (2); and
executing (S27) audio communication with the mobile station (2),
these steps being performed by he terminal device (3).

6. A method according to claim 2, **characterized by** further comprising the steps of:
opening (S32) a session of an audio communication service with the terminal device (3), and transmitting an audio communication disconnection signal to the base station when the audio communication is terminated;
executing (S39) establishment of a session of the data communication service based on the short-distance wireless communication with the terminal device (3);
transmitting (S40) a data communication resume signal to the base station (1); and
restarting (S41) data communication with the terminal device (3),
these steps being performed by the mobile station (2).

7. A method according to claim 3, **characterized by** further comprising the steps of:
opening (S29) a session of an audio communication service with the mobile station (2) when the audio communication is terminated;
executing (S39) establishment of a session of the data communication service based on the short-distance wireless communication with the mobile station (2); and
restarting (S41) data communication with the mobile station (2),
these steps being performed by the terminal device.

8. A communication system which has a mobile station (2) connectable to a base station (1) of a mobile communication system through wireless communication, and a terminal device (3) connectable to the mobile station (2) through short-distance wireless communication, **characterized in that** the mobile station (2) has:
communicating means (17) for performing wireless communication processing of a data communication signal and an audio incoming call signal with the base station (1);
short-distance wireless communicating means (18) for executing wireless communication processing of the data communication signal, a session establishment signal and a session open request with the terminal device (3); and
controlling means (19) for executing data communication based on the short-distance wireless communication with the terminal device (3), and notifying the terminal device (3) that there is the audio incoming call in accordance with an audio incoming call signal transmitted from the base station (1) during data communication, and
the terminal device (3) has:
short-distance wireless communicating means (36) for executing wireless communication processing of the data communication signal, the session establishment signal and the session open request with the mobile station (2); and
controlling means (37) for judging that there is the audio incoming call when the session open request is received from the mobile station (2) during the data communication with the mobile station (2).

9. The communication system according to claim 8, **characterized in that** the controlling means (19) of the mobile station (2) performs:
controlling the short-distance wireless communicating means (18), and establishing a session of a data communication service based on the short-distance wireless communication with the terminal device (3), thereby executing data communication;
checking whether there is an audio incoming call signal transmitted from the base station (1) during the data communication with the terminal device (3); and
notifying that there is the audio incoming call during the data communication by transmitting the session open request of the data communication service to the termination device (3) when the audio incoming call signal is received.

10. The communication system according to claim 8, **characterized in that** the controlling means (37) of the terminal device (3) performs:
controlling the short-distance wireless communicating means (36), and establishing a session of the data communication service based on the short-distance wireless communication with the mobile station (2), thereby executing the data communication;
checking whether there is the session open request transmitted from the mobile station during the data communication with the mobile station (2); and
judging that there is the audio incoming call during the data communication when the session open request is received.

11. The communication system according to claim 8, **characterized in that** the controlling means (19) of the mobile station (2) performs:
controlling the short-distance wireless communicating means (18), and establishing a session of a data communication service based on the short-distance wireless communication with the terminal device (3), thereby executing he data communication;
checking whether there is the audio incoming call signal transmitted from the base station (2) during the data communication with the terminal device (3);
notifying that there is an audio incoming call during the data communication by transmitting the session open request of the data communication service to the terminal device (3) when the audio incoming call signal is received;
transmitting a temporal disconnection signal of the data communication to the base station (1), and establishing a session of an audio communication service based on the short-distance wireless communication with the terminal device (3);
transmitting the ringing tone signal to the terminal device (3), receiving the call start response signal transmitted from the terminal device with respect to the ringing tone signal, and transmitting an incoming response signal relative to the audio incoming call signal to the base station (1); and
executing audio communication with the terminal device (3) .

12. The communication system according to claim 8, **characterized in that** the controlling means (37) of the terminal device (3) performs:
controlling the short-distance wireless communicating means (36), and establishing a session of the data communication service based on the short-distance wireless communication with the mobile station (2), thereby executing data communication;
checking whether there is the session open request transmitted from the mobile station (2) during the data communication with the mobile station (2), and judging that there is an audio incoming call during the data communication when the session open request is received;
executing establishment of a session of an audio communication service based on the short-distance wireless communication with the mobile station (2);
receiving the ringing tone signal from the mobile station (2), and transmitting the call start response signal to the mobile station with respect to the ringing tone signal; and
executing audio communication with the mobile station (2).

13. The communication system according to claim 9, **characterized in that** the controlling means (19) of the mobile station (2) performs:
opening a session of an audio communication service with the terminal device (3) and transmitting an audio communication disconnection signal to the base station (1) when the audio communication is terminated;
executing establishment of a session of the data communication service based on the short-distance wireless communication with the terminal device (3); and
transmitting a data communication resume signal to the base station (1) and restarting the data communication with the terminal device (3).

14. The communication system according to claim 10, **characterized in that** the controlling means (37) of the terminal device (3) performs:
executing opening of a session of an audio communication service with the mobile station (2) when the audio communication is terminated;
executing establishment of a session of the data communication service based on the short-distance wireless communication with the mobile station (2); and
restarting the data communication with the mobile station (2).
